# DEMANDE DE BREVET EUROPEEN

(11) **EP 1 449 419 A1**
(43) Date de publication de la demande: **25.08.2004**
(21) Numéro de dépôt: 04290438.3
(22) Date de dépôt: 19.02.2004
(51) Int. Cl.: A01B 21/08

(54) **Appareil agricole pour le travail du sol du genre comportant au moins deux lignes de disques**

(30) Priorité: 20.02.2003 FR 0302099
(71) Demandeur: ETABLISSEMENTS FRANOUET, 02190 Guignicourt (FR)
(72) Inventeur: Boucton, Jean, 51110 Bazancourt (FR); Franquet, Benoist, 51100 Reims (FR)
(74) Mandataire: Hammond, William

(57) **Abrégé**

Cet appareil agricole pour le travail du sol est destiné à être attelé à un tracteur, du genre comportant au moins deux lignes de disques (2,3) montés sur un châssis sensiblement horizontal. Les disques (41, 42 et 51, 52) de chaque ligne sont montés en opposition, d'une part, par rapport au plan médian dudit châssis et, d'autre part, sur deux lignes consécutives.

Cet appareil comprend aussi deux disques (6 ou 7) en partie centrale, inclinés en opposition l'un par rapport à l'autre.

Application dans le machinisme agricole

## Description

La présente invention concerne un appareil agricole pour le travail du sol du genre comportant au moins deux lignes de disques.

On connaît des appareils de travail du sol à disques destinés à une préparation superficielle du sol en vue d'un semis. Très généralement ces appareils comprennent un châssis sur lequel est disposée au moins une ligne de disques : souvent deux lignes. Ces appareils sont le plus souvent tirés par un tracteur ; mais ils peuvent aussi être poussés devant ce tracteur : dans ce cas, à l'arrière de ce tracteur, peut être situé un semoir.

Mais, on a constaté avec de tels appareils comportant au moins deux lignes de disques, un effet de dérive principalement lorsque cet appareil est poussé. Cet effet de dérive entraîne une mise en travers de l'appareil à disques ce qui le rend inutilisable. En effet, la position de la première ligne par rapport à la seconde ligne est par convention toujours plus éloignée des roues directrices du tracteur : cet état provoque du fait de la longueur différente du bras de levier une résultante supérieure pour cette première ligne. Cet effort provoque une dérive continue de l'ensemble appareil/tracteur et, par là-même, une impossibilité de conduite en ligne d'un tel ensemble.

Aussi, un des buts de la présente invention est-il de fournir un appareil à disques comportant au moins deux lignes de disques qui permet d'obvier, en particulier, l'inconvénient ci-dessus.

Un autre but de l'invention est de fournir un appareil du genre ci-dessus dont la fabrication n'est pas perturbée par rapport à celle des appareils traditionnels.

Ces buts, ainsi que d'autres qui apparaîtront par la suite, sont atteints par un appareil agricole pour le travail du sol, destiné à être attelé à un tracteur, du genre comportant au moins deux lignes de disques montés sur un châssis sensiblement horizontal, les disques de chaque ligne étant montés en opposition, d'une part, par rapport au plan médian du châssis et, d'autre part, sur deux lignes consécutives, lequel appareil est caractérisé par le fait qu'il comprend aussi deux disques en partie centrale, inclinés en opposition l'un par rapport à l'autre.

Selon un premier mode de réalisation, les deux disques en partie centrale appartiennent à une même ligne, chacun étant incliné d'angles différents que ceux des disques situés du même côté du plan médian que lui.

Selon un second mode de réalisation, les deux disques en position centrale sont disposés chacun sur une ligne de disques, dans le plan médian de l'appareil, et selon une même inclinaison que ceux de la demi-ligne sur laquelle ils sont montés.

La description qui va suivre et qui ne comporte aucun caractère limitatif doit être lue, en regard des figures annexées, parmi lesquelles :
- la figure 1 est une vue schématique en perspective d'un appareil selon un premier mode de réalisation de la présente invention ;
- la figure 2 est une vue de dessus de l'appareil selon la figure 1;
- la figure 3 est une vue de face de l'appareil selon la figure 2; et,
- la figure 4 est une vue de dessus partielle de l'appareil selon un second mode de réalisation.

Ainsi qu'on peut le voir sur ces figures, un appareil agricole pour le travail du sol du genre comportant au moins deux lignes de disques montés en opposition comprend un châssis 1 et deux lignes 2 et 3 d'ensemble, 4 et 5 respectivement, de disques. La ligne 2 ou première ligne est celle la plus éloignée des roues directrices du tracteur, le sens d'avancement étant représenté par la flèche F ; lorsque l'appareil est poussé le sens d'avancement est le même grâce à un mécanisme d'attelage réversible (non représenté). Sur les figures ont été représentés seulement deux éléments du châssis 1 : les barres-supports 11 et 12 des ensembles 4 et 5 de disques.

Selon la présente invention, chaque ensemble 4 et 5 de disques est divisé en deux sous-ensembles 41, 42, d'une part, et 51, 52, d'autre part, par rapport au plan médian du châssis 1, parallèle à la direction d'avancement F. Chaque sous-ensemble 41, 42 et 51, 52 est monté en opposition par rapport à celui de la même ligne et à celui situé sur l'autre ligne du même côté de ce plan médian.

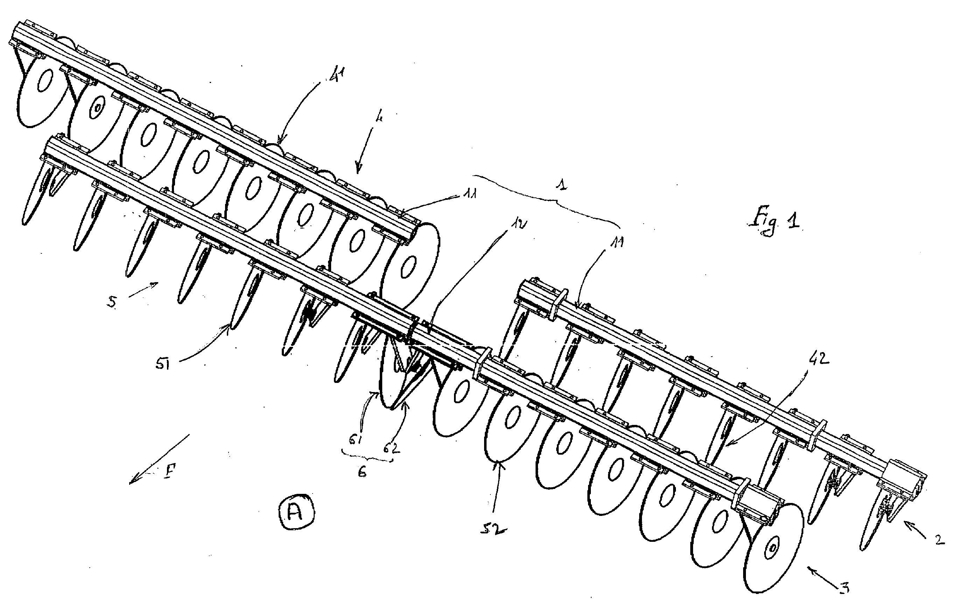

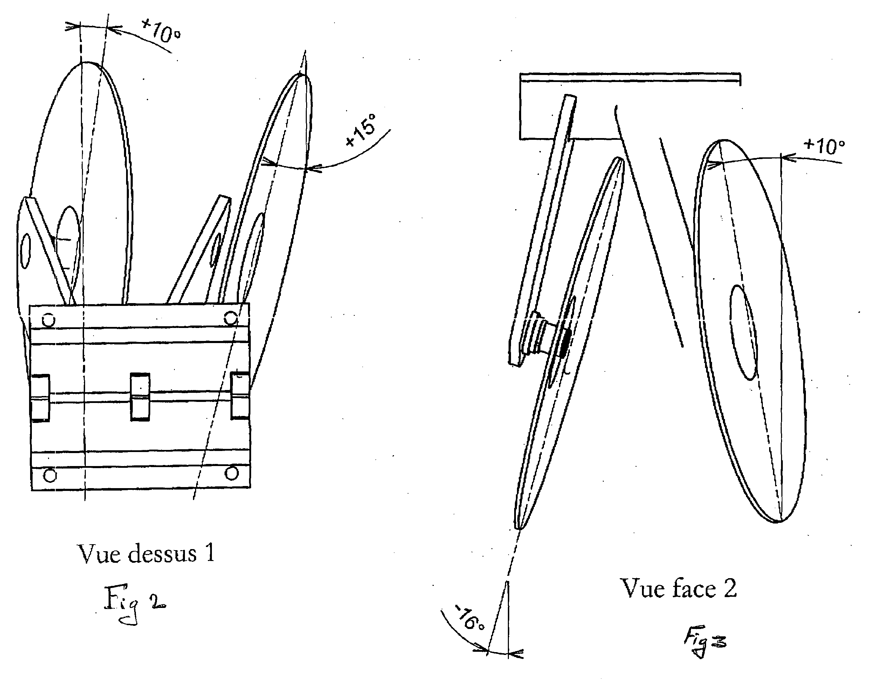

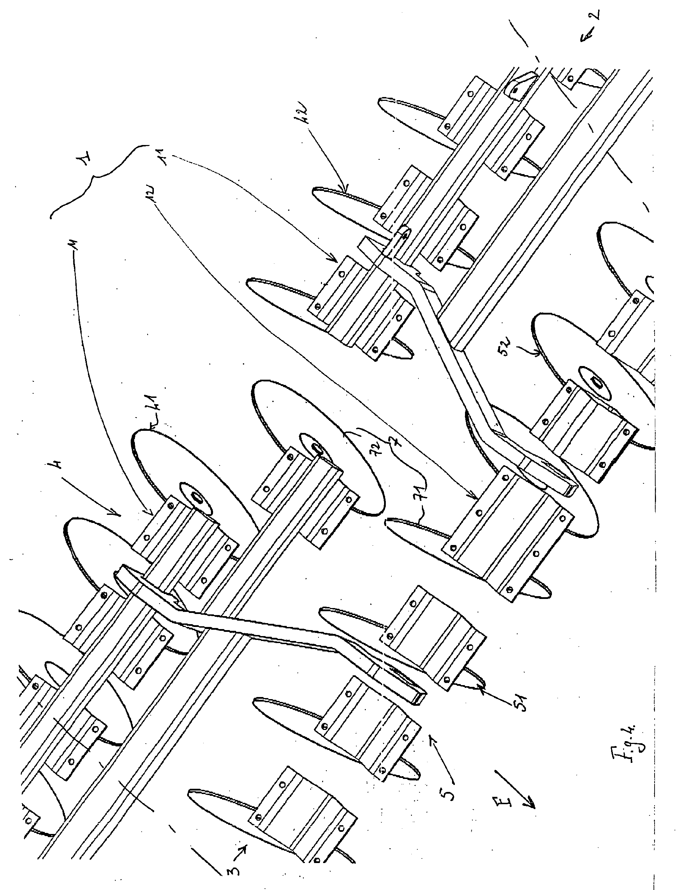

De plus, selon un premier mode de réalisation, afin de ne pas laisser une bande centrale non travaillée, l'appareil comporte, sur l'une des lignes de disques, une paire 6 de disques 61 et 62 situés en partie centrale de part et d'autre du plan médian : dans le présent exemple de réalisation, le disque 61 étant du même côté que le sous-ensemble 51 et le disque 62 que le sous-ensemble 52. Mais ces disques 61 et 62 ne sont pas inclinés des mêmes angles que ceux du sous-ensemble auquel ils appartiennent: ainsi, comme représenté aux figures 2 et 3, l'un, le disque 61 par exemple, est incliné par rapport à l'horizontale d'un angle d'environ 10° et de 16° par rapport à la verticale ; l'autre, le disque 62 dans ce présent exemple de réalisation est incliné d'environ 15° par rapport à l'horizontale et d'environ 10° par rapport à la verticale. Quant aux autres disques ils sont inclinés de 15° par rapport à l'horizontale et de 10° par rapport à la verticale.

Selon un second mode de réalisation de la présente invention représentée à la figure 4, les deux disques en position centrale 71 et 72 sont disposés chacun sur une ligne de disques 2 et 3, dans le plan médian de cet appareil, de même inclinaison que ceux de la demi-ligne sur laquelle ils sont montés : ils sont donc inclinés en opposition l'un par rapport à l'autre. Ces disques 71 et 72 sont ainsi placés sensiblement l'un derrière l'autre.

Lorsqu'un appareil agricole de travail du sol conforme à la présente invention est tiré ou poussé par un tracteur, on n'observe aucun phénomène de dérive : l'ensemble appareil/ tracteur reste en ligne.

## Revendications

1. Appareil agricole pour le travail du sol, destiné à être attelé à un tracteur, du genre comportant au moins deux lignes de disques (2,3) montés sur un châssis sensiblement horizontal, les disques (41,42 et 51,52) de chaque ligne étant montés en opposition, d'une part, par rapport au plan médian dudit châssis et, d'autre part, sur deux lignes consécutives, **caractérisé par le fait qu'**il comprend aussi deux disques (6 ou 7) en partie centrale, inclinés en opposition l'un par rapport à l'autre.

2. Appareil agricole pour le travail du sol selon la revendication 1, **caractérisé par le fait que** les deux disques (61,62) appartiennent à une même ligne, chacun étant incliné d'angles différents que ceux des disques situés du même côté du plan médian que lui.

3. Appareil agricole pour le travail du sol selon la revendication 1, **caractérisé par le fait que** les deux disques (71,72) sont disposés chacun sur une ligne de disques (2,3), dans le plan médian dudit appareil, et selon une même inclinaison que ceux de la demi-ligne sur laquelle ils sont montés.
